# EUROPEAN PATENT APPLICATION

(11) **EP 2 759 992 A1**
(43) Date of publication of application: **30.07.2014**
(21) Application number: 12833096.6
(22) Date of filing: 25.05.2012
(51) Int. Cl.: G07F 15/06

(54) **AUTOMATIC METERING LOGOUT METHOD FOR PRE-PAID ELECTRICITY VENDING SYSTEM**

(30) Priority: 21.09.2011 CN 201110281601
(71) Applicant: Holley Metering Ltd., Zhejiang 310023 (CN)
(72) Inventor: ZHANG, Ping, Hangzhou Zhejiang 310023 (CN); GUO, Junfeng, Hangzhou Zhejiang 310023 (CN); CHEN, Kai, Hangzhou Zhejiang 310023 (CN); SONG, Xiqiang, Hangzhou Zhejiang 310023 (CN)
(74) Representative: Bettinger Schneider Schramm
(86) International application number: PCT/CN2012/000723
(87) International publication number: WO 2013/040846

(57) **Abstract**

It is disclosed that a method for automatically removing meters from a prepayment vending system being characterized in steps as following that: Sending a meter removing request data table by a user via a customer interface unit (CIU) to a terminal server; Receiving said meter removing request data table and inquiring customer/meter file data table by the terminal server; Accepting the meter removing request and returning a data table representative of 'confirm' back the CIU by the terminal server; Receiving the data table representative of 'confirm' by the CIU, and verifying said data table by the user before transmitting the verified data table by the CIU to the terminal server; Receiving and recording the verified data table, and then creating a meter removing record, as well as returning a series of DM_TOKEN data code back the CIU by the terminal server; Communicating and inputting the series of DM_TOKEN data code by the CIU to the meter to be removed or logged off, and then returning a series of RC_TOKEN data code to the CIU, after loading said DM_TOKEN data code, by the meter to be removed or logged off; Loading the returned RC_TOKEN data code from the meter, and then controlling the relay thereof to switch off, as well as creating and transmitting a series of MC_TOKEN data code to the terminal server by the CIU; Receiving and loading the series of MC_TOKEN data code, and then determining whether some balances of the user remained exists by the terminal server; Receiving and decoding the MC_TOKEN data code, and then calculating the number of balance remained, as well as creating a meter removed record by the terminal server as long as determined the balance exists; receiving and decoding the MC_TOKEN data code, and then creating directly a meter removed record by the terminal server as long as determined the balance even no exists.

## Description

### TECHNICAL FIELD

The present invention generally relates to electric power measurement or metering, in particular, relates to a method for automatically removing or logging-off meters from a prepayment vending system.

### BACKGROUND

Prepayment technology, being applied in resolving the issues in charging the consumption fee of utility products, such as water, electric, gas and heat power, is constantly improved along with the development of the utility meter and automatic metering system technology, for example, available of the automation and intelligentization of fee charging, as well as addressing the defects caused in conventional manner of charge after use, allowing for the utility provider efficiently administrating the utility consumption situation. However, a vending system utilized with the prepayment technology still can't avoid the hidden hazard under the safety performance of data access or exchange without preventing the system from disoperation or attack by illegal solution, thereby resulting in critical financial loss.

A prepayment vending system at present generally is applied with a card cassette system (such as IC card) as a carrier for purchase operation of utility electricity, there are various kinds of software defects apart from hardware defects, such as data security that is a vital technical problem of all IC card-type prepayment vending system. The data security of many prepayment vending system, however, is insufficient to be ideal in the prior art. In view of removing or logging an electric meter off to ensure that the user data and electric consumption information stills and then charging the utility fee or charge statements, while installing or dismantling an electric meter as being needed to be maintained or removed in concerning with existing prepayment vending system, although abbreviating meter reading steps on visit, which is very complicated and susceptible to cause error. There is still even ineffective method or system to solve the meter removing and the data transmission process.

There is a need, therefore, for how to effectively automate the meter removing or logging off process, as well as data encryption, decryption and verification, by providing for a safe and reasonable method for removing or logging-off meters from a prepayment vending system. A need exists for the primary issue as aforementioned that promotes safe operation of data transmission in removing process.

### SUMMARY

Embodiments of the present invention address or alleviate the above needs, as well as others, by providing a method for automatically removing meters from a prepayment vending system, which is characterized in steps as following that:
1) Sending a meter removing request data table by a user via a customer interface unit, CIU, to a terminal server;
2) Receiving said meter removing request data table and inquiring customer/meter file data table by the terminal server;
3) Accepting the meter removing request and returning a data table representative of 'confirm' back to the CIU by the terminal server as long as the said meter removing request data table being consistent with a customer/meter file data table pre-stored in a remote memory; refusing the meter removing request and returning a data table representative of 'failure' back to the CIU by the terminal server;
4) Receiving the data table representative of 'confirm' by the CIU, and verifying said data table by the user before transmitting the verified data table by the CIU to the terminal server;
5) Receiving and recording the verified data table, and then creating a meter removing record, as well as returning a series ofDM_TOKEN data code back to the CIU by the terminal server;
6) Communicating and inputting the series ofDM_TOKEN data code by the CIU to the meter to be removed or logged off, and then returning a series of RC_TOKEN data code to the CIU, after loading said DM_TOKEN data code, by the meter to be removed or logged off;
7) Loading the returned RC_TOKEN data code from the meter, and then controlling the relay thereof to switch off, as well as creating and transmitting a series of MC_TOKEN data code to the terminal server by the CIU;
8) Receiving and loading the series of MC_TOKEN data code, and then determining whether some balances of the user remained exists by the terminal server;
9) Receiving and decoding the MC_TOKEN data code, and then calculating the number of balance remained, as well as creating a meter removed record by the terminal server as long as it is determined that the balance exists; receiving and decoding the MC_TOKEN data code, and then creating directly a meter removed record by the terminal server as long as it is determined the balance does not exist.

In a preferred embodiment of the present invention, the customer/meter file data table, including meter file data table and customer file data table, are stored in the remote memory.

Another preferred embodiment of the present invention comprises in said step 1), comparing the real time clock (RTC) between the CIU and the meter to be removed or logged off and determining the consistency therebetween, if determined, then transmitting said meter removing request data table; if not determined, then calibrating the RTC of the CIU itself in correspondence with said meter thereof to guaranteeing said consistency, and then transmitting said meter removing request data table.

A still another preferred embodiment of the present invention comprises reading the electric power consumption data of the user after having determined the consistency, and then encoding the electric power consumption data to integrating it within the meter removing request data table by the CIU.

In yet another preferred embodiment of the present invention the electric power consumption data of the user comprises currently electric consumption data and historically electric consumption data, the currently electric consumption data includes currently electric consumption value, currently max demand value, and currently instantaneous demand value; the historically electric consumption data includes historically electric consumption value, time of use (TOU) value, and accumulatively max demand value.

An alternatively preferred embodiment of the present invention comprises in step 7), decoding the RC_TOKEN data code to obtaining and processing a state data table of the meter relay/auxiliary relay, a mode data table of relay controlling data table, and a data table of overload threshold value by the CIU, for further collecting a relay controlling data code from above data table and transmitting it to the meter to switch the meter relay off.

Another preferred embodiment of the present invention comprises in step 9), obtaining a balance accounts command from the MC_TOKEN data code, and collecting a meter file data table and a customer file data table from the remote memory, as well as calculating the number of balance remained according to the electric consumption data by the terminal server, after decoding said MC_TOKEN data code.

In still another preferred embodiment of the present invention, both the data transmission and function implementing process thereof of the entire procedure of the method for automatically removing meters from a prepayment vending system are achieved with data encryption mechanism.

TOKEN is a particular data frame used to control data transmission right of network nodes which only holding a TOKEN can transmit data frame. Because of a network node transmitting data frame deleting the TOKEN received after obtaining a data transmission right, in a network circular loop, there won't exist any TOKEN appearing in this or any other node can guarantee loop, thereby allowing for only one node transmitting data frame at a certain moment, which hence being an in-contention type access medium. TOKEN is configured with 'busy' and 'idle' states, under the normal operation of the network loop, for unidirectional transmission of the node data.

A network node is needed to wait for the arrival of an idle TOKEN when sending data, set to represent 'busy' after obtaining said idle TOKEN, and then transmit data frame in frame unit. If next node is a destination node for the purpose, then the frame, with a correctly received and copied mark, will be copied and stored in a buffer, and will be transmitted to the source node which recovering it after sent back to the circular loop and transmitted a cycle therein, and then set to represent 'idle' and transmitted down to the next node.

Embodiments of the present invention, meanwhile, address or alleviate the above needs, as well as others, by providing further a prepayment vending system, comprising a CIU, a plurality of meters, a remote memory, and a terminal server being communicated with said remote memory for data access, wherein the CIU includes:
an input unit, being configured for a user inputting various operating instructions to the CIU;
an output unit, being communicated with the terminal server for bi-directional data exchange, and the meters for reading electric power consumption and associated parameters, respectively;
a display, being configured to alternately display the subject associated with customer;
a local memory; and
a digital signal processor (DSP), being communicated respectively with the input unit, the output unit, the display and the local memory.

In a preferred embodiment of the present invention, the output unit includes a GPRS block, a PSTN block, a ZigBee block, a RF block, and a PLC block.

In another preferred embodiment of the present invention, various communication setting data table, comprising GPRS parameter, PSTN parameter, ZigBee address parameter, RF address parameters, and PLC address parameters, allowing for setting and controlling of the GPRS block, the PSTN block, the ZigBee block, the RF block, and the PLC block, respectively, are stored in the local memory.

The above described features and advantages, as well as others, will become more readily apparent to those skilled in the art by reference to the following detailed description and its accompanying drawings. While it would be desirable to provide an automatic releaser that provides one or more of the above mentioned advantageous features, or other advantages as may be apparent to those reviewing this disclosure, the teachings disclosed herein extend to those embodiments which fall within the scope of the appended claims, regardless of whether they accomplish one or more of the aforementioned features or advantages.

### BRIEF DESCRIPTION OF THE ACCOMPANYING DRAWINGS

FIG. 1 shows a flow diagram of the method for automatically removing meters from a prepayment vending system of the present invention;
FIG. 2 shows structural schematic diagram of a preferred embodiment of the prepayment vending system for the method of the present invention;
FIG. 3 shows an electric meter logging-off interface of a preferred embodiment of the method for automatically removing meters from a prepayment vending system of the present invention;
FIG. 4 shows another electric meter logging-off or removing interface of a preferred embodiment of the method for automatically removing meters from a prepayment vending system of the present invention;
FIG. 5 shows another electric meter logging-off or removing interface of another preferred embodiment of the method for automatically removing meters from a prepayment vending system of the present invention;
FIG. 6 shows another electric meter installing interface of another preferred embodiment of the method for automatically removing meters from a prepayment vending system of the present invention;
FIG. 7 shows a further electric meter installing interface of another preferred embodiment of the method for automatically removing meters from a prepayment vending system of the present invention.

### DETAILED DESCRIPTION OF THE PREFERRED EMBODIMENTS

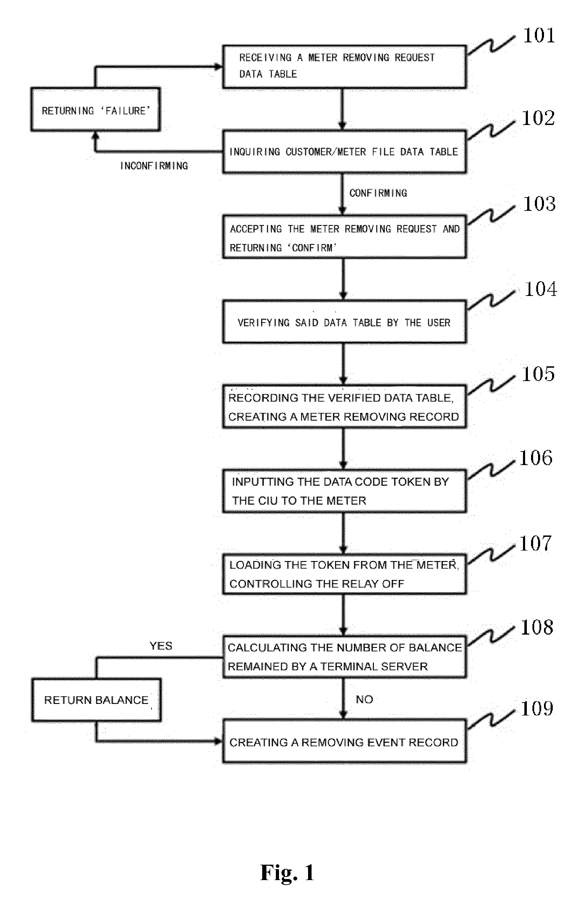

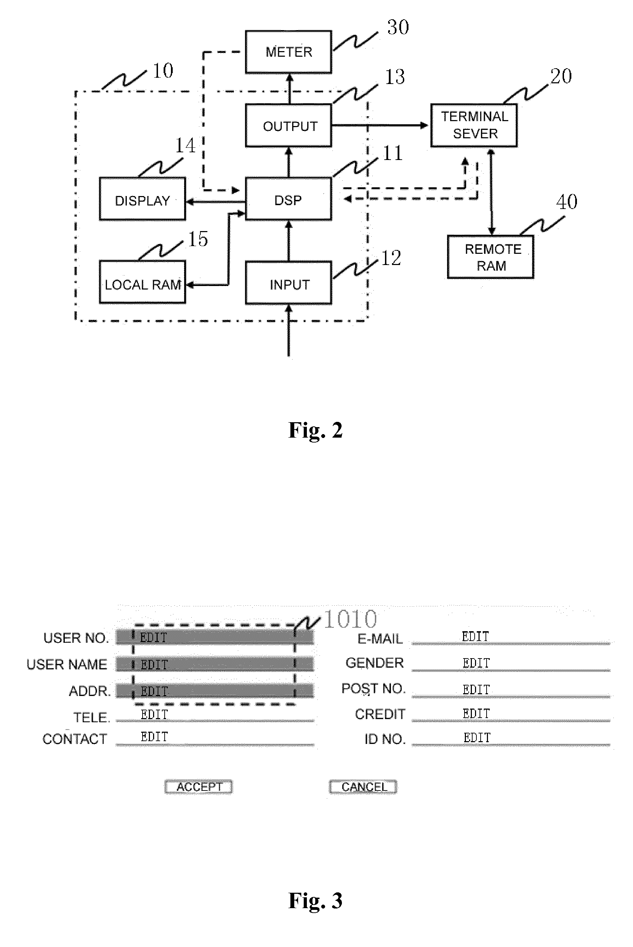

With reference now to the FIG.1, it is illustrated that a first preferred embodiment of the method for automatically removing meters from a prepayment vending system of the present invention which is implemented by a prepayment vending system, shown in FIG.2, with a CIU 10 including an input unit 12, an output unit 13, a display 14, a local memory 15 and a digital signal processor (DSP) 11. In step 101, a meter removing request data table is sent by a user via the CIU to a terminal server. FIG.3 illustrates a preferred customer input interface, for example, wherein 'EDIT' indicates the objects that can be entered or amended directly by the user himself, and the objects selected by a dash line square block 1010 as shown in the drawing are set to be requisite ones. The CIU 10 sends said meter removing request data table which comprising such data table as meter manufacturer data table, and meter status/type data table, etc, that is set with a data head 'BASIC'. For example, the meter manufacturer data table BASIC_MANUFACTURER including data frame MANUFACTURER_ID, MANUFACTURER_CODE, CREATOR_ID, etc, the meter status/type data table BASIC_METER_TYPE including data frame METER_MODEL_ID, MANUFACTURER_ID, CREATOR_ID, TARIFF_NUM, etc, respectively. The data frame MANUFACTURER_ID and METER_MODEL_ID serves as an important part in the aforementioned two data table, wherein the data table BASIC_MANUFACTURER and BASIC_METER_TYPE are mutually communicated with each other via the data frame MANUFACTURER_ID and CREATOR_ID. The meter removing request data table is automatically created by the DSP 11 collecting and loading the data pre-stored in the local memory 15 in correspondence with the meter removing request as illustrated in FIG.3.

In the step 102, the CIU 10 creates a data table according to the request from user and transmits it to the terminal server 20 as long as selecting the 'log off control key as shown in the drawing by user, the terminal server 20 receives said meter removing request data table and inquires customer/meter file data table which being pre-stored in a remote memory 40 comprises meter file data table and customer file data table, that is set with a data head 'INFO', for example, wherein the meter file data table INFO_METER including data frame METER_MODEL_ID, METER_ADDR, STATUS, SGC_ID, USER_ACCOUNT, ZONE_TYPE_ID, and REGION_TYPE_ID, etc, the customer file data table INFO_USER including data frame USER_ACCOUNT, USER_ADDR, METER_ADDR, STATUS, and USER_ID, etc, respectively. It is needed that communicating both the data frame USER_ACCOUNT with each data table thereof while associating the meter with the customer information, as well as communicating the data frame METER_MODEL_ID in data table INFO_METER with the data frame METER_MODEL_ID in the data table BASIC_METER_TYPE.

Step 103 comprises accepting the meter removing request and returning a data frame representative of 'confirm' back to the CIU 10 by the terminal server 20 as long as the said meter removing request data table being consistent with a customer/meter file data table pre-stored in a remote memory 40; refusing the meter removing request and returning a data frame representative of 'failure', such as a return value being defined 0 representative of confirm, namely successful operation, and a return value being defined 1 representative of failure, namely unsuccessful operation , as well as anther return value being defined 8 representative of incorrect operation, like incorrect parameter set or format error, back to the CIU 10 by the terminal server 20. The CIU device 10 identifies these return values to load associated data stored in the local memory 15 and create notice information of customer operation for guiding thereto.

In a preferred embodiment of the present invention, step 104 comprises receiving the data table representative of 'confirm' by the CIU 10, and verifying said data table by the user before transmitting the verified data table by the CIU 10 to the terminal server 20.

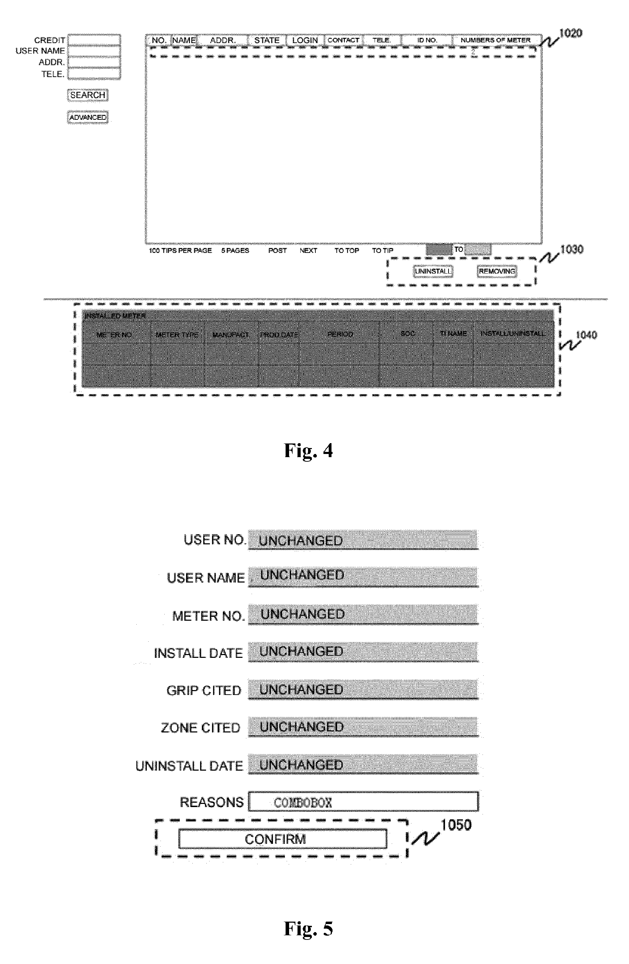

FIG.4 illustrates an operation interface of the remote server 20. As mentioned above, the remote server 20 creates the shown interface, wherein a plurality of objects selected by a dash line square block 1020 as shown in the drawing are set in said interface that can be configured to simultaneously control data information of several customers. There is a table field 1040 created on the lower part of this interface when selecting a customer object 1020 (the system of the invention guarantees that the field 'installed meter numbers of a customer' should not be zero), as shown in FIG.4, indicating, for example meter serial number, meter type, meter manufacturer, SGC, TI name, meter removed/installed date, etc, which being identified by the data frame from customer/meter file data table and integrated by the remote server 20.

In a preferred embodiment of the present invention, the step 105comprises receiving and recording the verified data table, and then creating a meter removing record by selecting a 'log off control key indicated in a dash line square block 1030, as well as returning a series of DM_TOKEN data code back to the CIU and storing it in the remote memory 40 by the terminal server 20.

In a preferred embodiment of the present invention, step 106 comprises communicating and inputting the series ofDM_TOKEN data code by the CIU 10 to the meter 30 to be removed or logged off, and then returning a series of RC_TOKEN data code to the CIU, after loading said DM_TOKEN data code, by the meter 30 to be removed or logged off.

In a preferred embodiment of the present invention, step 107 comprises loading the returned RC_TOKEN data code from the meter 30, and then controlling the relay thereof to switch off, as well as creating and transmitting a series of MC_TOKEN data code to the terminal server by the CIU 10.

In a preferred embodiment of the present invention, step 108 comprises receiving and loading the series of MC_TOKEN data code, and then determining whether some balances of the user remained exists by the terminal server 20.

In a preferred embodiment of the present invention, step 109 comprises receiving and decoding the MC_TOKEN data code, and then calculating the number of balance remained, as well as creating a meter removed record by the terminal server 20 and storing it in the remote memory 40 as long as it is determined the balance exists; receiving and decoding the MC_TOKEN data code, and then creating directly a meter removed record by the terminal server 20 and storing it in the remote memory 40 as long as determined the balance does not exist.

In the above process, both the data (such as data table) transmission and function implementing process thereof of the entire procedure of the method for automatically removing meters from a prepayment vending system are achieved with data encryption mechanism. Data key is determined with a data head 'KEY', such as setting SGC encryption factor, TI encryption factor, tariff index encryption factor, and tariff version encryption factor, as well as apparatus encryption factor required by the terminal server 20, for ensuring the data safety and integrity whereby, for example, preventing the data table from distortion or illegal operation, such as tariff data being necessarily set by the utility administrator, as well as the data from being obtained by a third part, in virtue of these factors.

In a preferred embodiment of the present invention, step 101 comprises, comparing the real time clock (RTC) between the CIU 10 and the meter 30 to be removed or logged off and determining the consistency therebetween, if determined, then transmitting said meter removing request data table; if not determined, then calibrating the RTC of the CIU itself in correspondence with said meter thereof to guaranteeing said consistency, and then transmitting said meter removing request data table.

In another preferred embodiment of the present invention, wherein reading the electric power consumption data of the user from the meter 30 after having determined the consistency, and then encoding the electric power consumption data to integrating it within the meter removing request data table by the CIU 10.

In yet another preferred embodiment of the present invention, the electric power consumption data of the user comprises currently electric consumption data and historically electric consumption data, the currently electric consumption data includes currently electric consumption value, currently max demand value, and currently instantaneous demand value; the historically electric consumption data includes historically electric consumption value, time of use (TOU) value, and accumulatively max demand value.

In an alternatively preferred embodiment of the present invention, step 107 comprises decoding the RC_TOKEN data code to obtaining and processing a state data table of the meter relay/auxiliary relay, a mode data table of relay controlling data table, and a data table of overload threshold value by the CIU 10, for further collecting a relay controlling data code from above data table and transmitting it to the meter 30 to switch the meter relay off.

In another preferred embodiment of the present invention, step 109 comprises obtaining a balance accounts command from the MC_TOKEN data code, and collecting a meter file data table and a customer file data table from the remote memory 40, as well as calculating the number of balance remained according to the electric consumption data by the terminal server 20, after decoding said MC_TOKEN data code.

The first embodiment of the present invention, meanwhile, addresses or alleviates the above needs, as well as others, by providing further a prepayment vending system, comprising a CIU 10, a plurality of meters 30, a remote memory 40, and a terminal server 20 being communicated with said remote memory 40 for data access, wherein the CIU 10 includes an input unit 12, being configured for a user inputting various operating instructions to the CIU 10; an output unit 13, being communicated with the terminal server 20 for bi-directional data exchange, and the meters 30 for reading electric power consumption and associated parameters, respectively; a display 14, being configured to alternately display the subject associated with customer; a local memory 15; and a digital signal processor 11, being communicated respectively with the input unit 12, the output unit 13, the display 14 and the local memory 15.

In a preferred embodiment of the present invention, the output unit includes a GPRS block, a PSTN block, a ZigBee block, a RF block, and a PLC block.

In another preferred embodiment of the present invention, various communication setting data table, comprising GPRS parameter, PSTN parameter, ZigBee address parameter, RF address parameters, and PLC address parameters, allowing for setting and controlling of the GPRS block, the PSTN block, the ZigBee block, the RF block, and the PLC block, respectively, are stored in the local memory.

In another preferred embodiment of the present invention, the meter removing request data table may comprise a state data table of the customer which being received and loaded, in the step 102, and further the data therein being verified to determine, for example, whether the customer proceeded the electric larceny during meter use by the terminal server 20, which can be implemented by both the data transmission and function implementing process thereof of the entire procedure of the method for automatically removing meters from a prepayment vending system with data encryption mechanism.

With reference now to the drawing remained, a second preferred embodiment of the method for automatically removing meters from a prepayment vending system of the present invention is illustrated being utilized for installing a new meter after removing a former or abandoned meter, thereby allowing for ensuring the integrity and validity of the customer data and automatic meter arrangement.

In accordance with the step 102, the CIU 10 creates a data table according to the request from user and transmits it to the terminal server 20 as long as selecting the 'log off control key as shown in the drawing by user, the terminal server 20 receives said meter removing request data table and inquires customer/meter file data table which being pre-stored in a remote memory 40 comprises meter file data table and customer file data table, that is set with a data head 'INFO', for example, wherein the meter file data table INFO_METER including data frame METER_MODEL_ID, METER_ADDR, STATUS, SGC_ID, USER_ACCOUNT, ZONE_TYPE_ID, and REGION_TYPE_ID, etc, the customer file data table INFO_USER including data frame USER_ACCOUNT, USER_ADDR, METER_ADDR, STATUS, and USER_ID, etc, respectively. It is needed that communicating both the data frame USER_ACCOUNT with each data table thereof while associating the meter with the customer information, as well as communicating the data frame METER_MODEL_ID in data table INFO_METER with the data frame METER_MODEL_ID in the data table BASIC_METER_TYPE.

Step 103 comprises accepting the meter removing request and returning a data frame representative of 'confirm' back to the CIU 10 by the terminal server 20 as long as the said meter removing request data table being consistent with a customer/meter file data table pre-stored in a remote memory 40; refusing the meter removing request and returning a data frame representative of 'failure', such as a return value being defined 0 representative of confirm, namely successful operation, and a return value being defined 1 representative of failure, namely unsuccessful operation , as well as anther return value being defined 8 representative of incorrect operation, like incorrect parameter set or format error, back to the CIU 10 by the terminal server 20. The CIU device 10 identifies these return values to load associated data stored in the local memory 15 and create notice information of customer operation for guiding thereto.

Step 104 comprises receiving the data table representative of 'confirm' by the CIU 10, and verifying said data table by the user before transmitting the verified data table by the CIU 10 to the terminal server 20.

Step 105 comprises creating a meter-removing operation interface as shown in FIG.5 by selecting a 'removing' control key indicated in a dash line square block 1030, receiving and recording the verified data table, only deleting data table comprising such as a customer serial number and associated utility product supplier, as well as zone, and then creating a meter removing record, as well as returning a series of DM_TOKEN data code back to the CIU 10 and storing it, in addition to such as a 'meter-removing reason', in the remote memory 40 by the terminal server 20 after selecting 'confirm'. Wherein, the field 'reason' in the mentioned interface can be entered by a user with character where can't be amended by the terminal server, as shown in the FIG.5, and the objects as indicated with grey spots can't be amended or tampered by either the CIU 10 or the terminal server 20. The 'COMOBOX' as shown indicates that the information representative therein is controlled by the encryption factors. Preferably, it is requested that restoring the data table associated with the meter and updating the meter data as determined said meter being recyclable, for easing to next load or verification.

Step 106 comprises communicating and inputting the series of DM_TOKEN data code by the CIU 10 to the meter 30 to be removed, and then returning a series of RC_TOKEN data code to the CIU, after loading said DM_TOKEN data code, by the meter 30 to be removed.

Step 107 comprises loading the returned RC_TOKEN data code from the meter 30, and then controlling the relay thereof to switch off, as well as creating and transmitting a series of MC_TOKEN data code to the terminal server by the CIU 10.

Step 108 comprises receiving and loading the series of MC_TOKEN data code, and then determining whether some balances of the user remained exists by the terminal server 20.

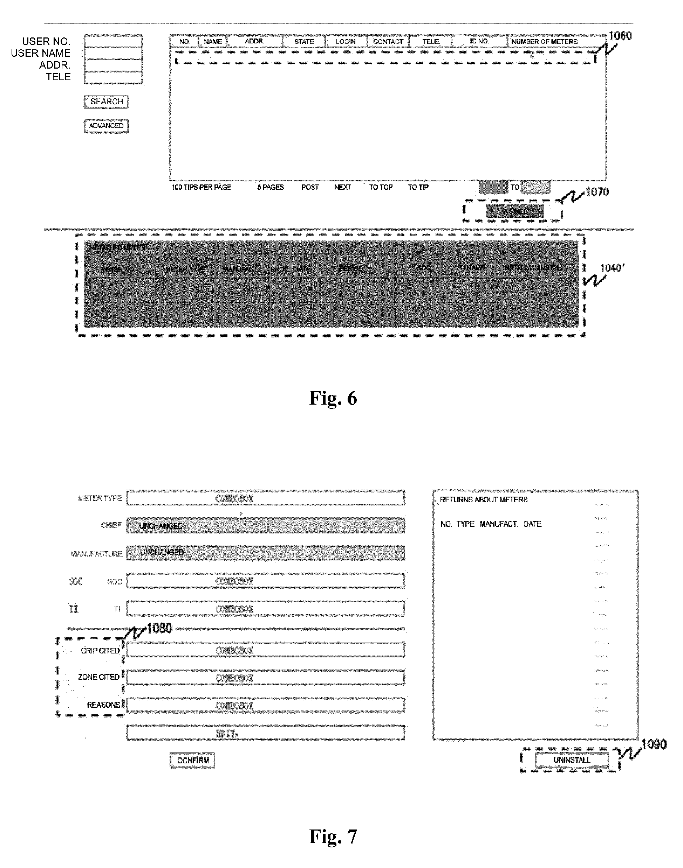

Step 109 comprises receiving and decoding the MC_TOKEN data code, and then calculating the number of balance remained, as well as creating a meter removed record by the terminal server 20 and storing it in the remote memory 40 as long as determined the balance exists; receiving and decoding the MC_TOKEN data code, and then creating directly a meter removed record by the terminal server 20 and storing it in the remote memory 40 as long as determined the balance even no exists. In the above process, for example, both the data (such as data table) transmission and function implementing process thereof of the entire procedure of the method for automatically removing meters from a prepayment vending system are achieved with data encryption mechanism. Data key is determined with a data head 'KEY', such as setting SGC encryption factor, TI encryption factor, tariff index encryption factor, and tariff version encryption factor, as well as apparatus encryption factor required by the terminal server 20, for ensuring the data safety and integrity whereby, for example, preventing the data table from distortion or illegal operation, such as tariff data being necessarily set by the utility administrator, as well as the data from being obtained by a third part, in virtue of these factors. Firstly, determining whether a meter installed or installed quantities of the customer, secondly immediately updating the data 'meter installed number' as long as successfully removing the meter, and then creating a data table representative of a plurality of customer objects 1060 on the interface as shown in the drawing, after installing a new meter, by the terminal server 20. There is a table field 1040' created on the lower part of this interface when selecting a customer object 1060 (the system of the invention guarantees that the objects table should be simultaneously operated), as shown in FIG.6, indicating, for example meter serial number, meter type, meter manufacturer, SGC, TI name, meter removed/installed date, etc, which being identified by the data frame from customer/meter file data table and integrated by the remote server 20.

Creating a meter-installing interface as shown in FIG.7 via selecting 'installing' control key after determining the data table by the terminal server 20, wherein, for example, the data 'associated power product supplier', 'zone' or 'meter-installing reason' indicated in a dash line square block 1080 are needed to be stored in the remote memory 40, and then selecting 'confirm' 1090.

Said step 101 comprises comparing the real time clock (RTC) between the CIU 10 and the meter 30 to be removed or logged off and determining the consistency therebetween, if determined, then transmitting said meter removing request data table; if not determined, then calibrating the RTC of the CIU itself in correspondence with said meter thereof to guaranteeing said consistency, and then transmitting said meter removing request data table.

Another preferred embodiment of the present invention comprises reading the electric power consumption data of the user from the meter 30 after having determined the consistency, and then encoding the electric power consumption data to integrating it within the meter removing request data table by the CIU 10.

In yet another preferred embodiment of the present invention, the electric power consumption data of the user comprises currently electric consumption data and historically electric consumption data, the currently electric consumption data includes currently electric consumption value, currently max demand value, and currently instantaneous demand value; the historically electric consumption data includes historically electric consumption value, time of use (TOU) value, and accumulatively max demand value.

Step 107 comprises decoding the RC_TOKEN data code to obtaining and processing a state data table of the meter relay/auxiliary relay, a mode data table of relay controlling data table, and a data table of overload threshold value by the CIU 10, for further collecting a relay controlling data code from above data table and transmitting it to the meter 30 to switch the meter relay off.

The first embodiment of the present invention, meanwhile, addresses or alleviates the above needs, as well as others, by providing further a prepayment vending system, comprising a CIU 10, a plurality of meters 30, a remote memory 40, and a terminal server 20 being communicated with said remote memory 40 for data access, wherein the CIU 10 includes an input unit 12, being configured for a user inputting various operating instructions to the CIU 10; an output unit 13, being communicated with the terminal server 20 for bi-directional data exchange, and the meters 30 for reading electric power consumption and associated parameters, respectively; a display 14, being configured to alternately display the subject associated with customer; a local memory 15; and a digital signal processor 11, being communicated respectively with the input unit 12, the output unit 13, the display 14 and the local memory 15.

In a preferred embodiment of the present invention, wherein the output unit includes a GPRS block, a PSTN block, a ZigBee block, a RF block, and a PLC block.

In another preferred embodiment of the present invention, wherein various communication setting data table, comprising GPRS parameter, PSTN parameter, ZigBee address parameter, RF address parameters, and PLC address parameters, allowing for setting and controlling of the GPRS block, the PSTN block, the ZigBee block, the RF block, and the PLC block, respectively, are stored in the local memory.

In another preferred embodiment of the present invention, the meter removing request data table may comprise a state data table of the customer which being received and loaded, in the step 102, and further the data therein being verified to determine, for example, whether the customer proceeded the electric larceny during meter use by the terminal server 20, which can be implemented by both the data transmission and function implementing process thereof of the entire procedure of the method for automatically removing meters from a prepayment vending system with data encryption mechanism.

It will be appreciated that the above-described embodiments are merely illustrative, and that those of ordinary skill in the art may readily devise their own implementations and modifications that incorporate the principles of the present invention and fall within the spirit and scope thereof.

## Claims

1. A method for automatically removing meters from a prepayment vending system, **characterized by** the steps as follows:
1) Sending a meter removing request data table by a user via a customer interface unit, CIU, to a terminal server;
2) Receiving said meter removing request data table and inquiring customer/meter file data table by the terminal server;
3) Accepting the meter removing request and returning a data frame representative of 'confirm' back to the CIU by the terminal server as long as the said meter removing request data table being consistent with a customer/meter file data table pre-stored in a remote memory; refusing the meter removing request and returning a data frame representative of 'failure' back to the CIU by the terminal server;
4) Receiving the data table representative of 'confirm' by the CIU, and verifying said data table by the user before transmitting the verified data table by the CIU to the terminal server;
5) Receiving and recording the verified data table, and then creating a meter removing record, as well as returning a series of DM_TOKEN data code back to the CIU and storing it in the remote memory by the terminal server;
6) Communicating and inputting the series ofDM_TOKEN data code by the CIU to the meter to be removed or logged off, and then returning a series of RC_TOKEN data code to the CIU, after loading said DM_TOKEN data code, by the meter to be removed or logged off;
7) Loading the returned RC_TOKEN data code from the meter, and then controlling the relay thereof to switch off, as well as creating and transmitting a series of MC_TOKEN data code to the terminal server by the CIU;
8) Receiving and loading the series of MC_TOKEN data code, and then determining whether some balances of the user remained exists by the terminal server;
9) Receiving and decoding the MC_TOKEN data code, and then calculating the number of balance remained, as well as creating a meter removed record and storing it in the remote memory by the terminal server as long as it is determined the balance exists; receiving and decoding the MC_TOKEN data code, and then creating directly a meter removed record and storing it in the remote memory by the terminal server as long as it is determined that the balance does not exist.

2. The method for automatically removing meters from a prepayment vending system of claim 1, wherein in step 1), comparing the real time clock (RTC) between the CIU and the meter to be removed or logged off and determining the consistency therebetween, if determined, then transmitting said meter removing request data table; if not determined, then calibrating the RTC of the CIU itself in correspondence with said meter thereof to guaranteeing said consistency, and then transmitting said meter removing request data table.

3. The method for automatically removing meters from a prepayment vending system of claim 2, wherein reading the electric power consumption data of the user after having determined the consistency, and then encoding the electric power consumption data to integrating it within the meter removing request data table by the CIU.

4. The method for automatically removing meters from a prepayment vending system of claim 3, wherein the electric power consumption data of the user comprises currently electric consumption data and historically electric consumption data, the currently electric consumption data includes currently electric consumption value, currently max demand value, and currently instantaneous demand value; the historically electric consumption data includes historically electric consumption value, time of use (TOU) value, and accumulatively max demand value.

5. The method for automatically removing meters from a prepayment vending system of claim 1, wherein step 7) comprises decoding the RC_TOKEN data code to obtaining and processing a state data table of the meter relay/auxiliary relay, a mode data table of relay controlling data table, and a data table of overload threshold value by the CIU, for further collecting a relay controlling data code from above data table and transmitting it to the meter to switch the meter relay off.

6. The method for automatically removing meters from a prepayment vending system of claim 1, wherein step 9) comprises obtaining a balance accounts command from the MC_TOKEN data code, and collecting a meter file data table and a customer file data table from the remote memory, as well as calculating the number of balance remained according to the electric consumption data by the terminal server, after decoding said MC_TOKEN data code.

7. The method for automatically removing meters from a prepayment vending system of claim 1, wherein the customer/meter file data table, including meter file data table and customer file data table, is stored in the remote memory.

8. The method for automatically removing meters from a prepayment vending system of claim 1, wherein both the data transmission and function implementing process thereof of the entire procedure of the method for automatically removing meters from a prepayment vending system are achieved with data encryption mechanism.

9. A prepayment vending system, comprising a CIU, a plurality of meters, a remote memory, and a terminal server being communicated with said remote memory for data access, wherein the CIU includes:
an input unit, being configured for a user inputting various operating instructions to the CIU;
an output unit, being communicated with the terminal server for bi-directional data exchange, and the meters for reading electric power consumption and associated parameters, respectively;
a display, being configured to alternately display the subject associated with customer;
a local memory; and
a digital signal processor (DSP), being communicated respectively with the input unit, the output unit, the display and the local memory.

10. The prepayment vending system of claim 9, wherein the output unit includes a GPRS block, a PSTN block, a ZigBee block, a RF block, and a PLC block.

11. The prepayment vending system of claim 9, wherein various communication setting data table, comprising GPRS parameter, PSTN parameter, ZigBee address parameter, RF address parameters, and PLC address parameters, allowing for setting and controlling of the GPRS block, the PSTN block, the ZigBee block, the RF block, and the PLC block, respectively, are stored in the local memory.
